# EUROPEAN PATENT APPLICATION

(11) **EP 2 081 375 A2**
(43) Date of publication of application: **22.07.2009**
(21) Application number: 09250014.9
(22) Date of filing: 05.01.2009
(51) Int. Cl.: H04N 5/262

(54) **Image processing system and camera including the same**

(30) Priority: 15.01.2008 JP 2008005878
(71) Applicant: Ricoh Company, Ltd., Tokyo 143-8555 (JP)
(72) Inventor: Shiraishi, Kenji, Tokyo 143-8555 (JP)
(74) Representative: Leeming, John Gerard

(57) **Abstract**

An image processing system is configured to include an imaging system which has a CCD (2a) to capture an image of a subject and outputs as pixel data an image signal of the subject output from the CCD (2a), a conversion buffer memory (7) which temporarily stores the pixel data according to each pixel position, a database (10) which stores correction information for each pixel, and a corrector circuit (9) which performs correction processing on each pixel data stored in the conversion buffer memory (7) based on the correction information stored in the database (10), and sequentially outputs the corrected pixel data. In the image processing system, the correction information in the database (10) is changed in accordance with a change in a magnification of the imaging system.

## Description

The present invention relate to improvements in an image processing system for a camera and a camera incorporating the image processing system.

There is a known image processing system for a camera which captures an image with a fisheye lens and converts the image in order to correct a distortion. Such an image processing system stores pixel data for one image size in a buffer memory before image conversion, converts pixel data at a coordinate of each pixel (at each address), reads pixel data at the converted coordinates and outputs the pixel data with distortion corrected.

However, this image processing system has a problem that it needs to include a buffer memory in a large capacity enough to store pixel data for one image size. Another problem is that it takes a lot of time to perform image conversion processing since the processing has to wait until pixel data for one image size is loaded into the buffer memory.

In view of solving the above problems, Japanese Unexamined Patent Application Publication No. 2007-156795 proposes an image conversion device with a buffer memory of a small capacity which achieves a high-speed image conversion processing.

In this image conversion device, the buffer memory does not have a capacity to store pixel data for one image size. The device is configured to make up for a shortage of memory capacity by overwriting the most previous pixel data with the most current pixel data when the buffer memory is full.

Meanwhile, in terms of camera design, an imaging system (optical system) and an image processing system have been generally developed separately. As a result, improvements of optical properties such as image distortion, brightness (shading), resolution (MTF), color aberration, and color magnification have been studied for the optical system and the image processing system separately, which causes another problem of a large increase in amounts of time and costs for camera development.

A distortion of an image will be described as an example.

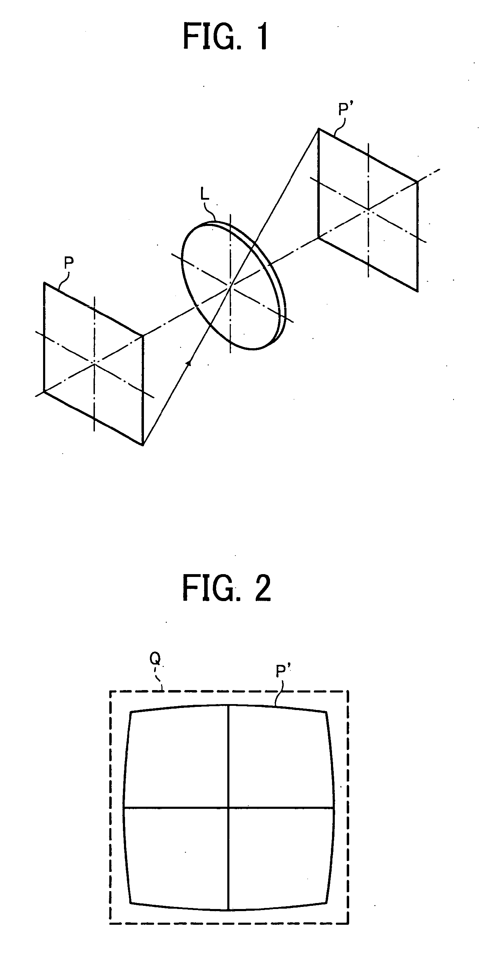

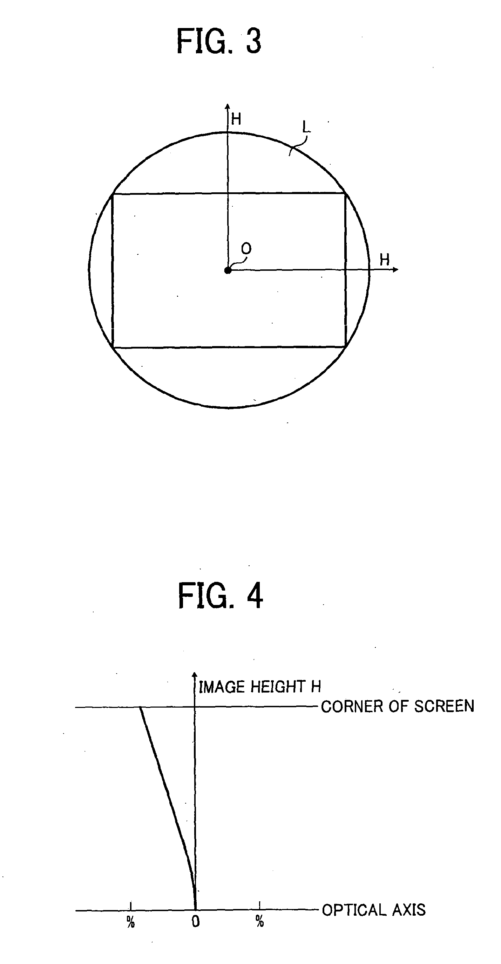

FIG. 1 shows a relation among a subject P, an optical system L, and a subject image P'. FIG. 2 shows the subject image P' having a barrel distortion. In FIG. 3 the distortion of the image P' grows from the center (optical axis) O of the optical system L to the periphery and a distortion rate increases in an image height direction H when the distortion rate of the optical axis is zero. FIG. 4 shows a general distortion rate curve. The rectangular frame in FIG. 3 corresponds to an imaging plane of a later-described image sensor.

In the prior art, a reduction in a distortion rate has been achieved by improving the optical design of the optical system L only, which poses a problem of an increase in the size of the optical system. The distortion can be corrected by the image processing system relatively easily. Therefore, it is preferable to develop the optical system L and image processing system of a camera together so that optical properties such as the distortion are corrected by the image processing system, aiming for improving image qualities.

The prior art image processing system partially solves the distortion of an image by an image processing technique together with the optical system L.

However, the prior art image processing system is not designed efficiently, with respective functions of the optical system L and the image processing system taken into consideration.

Furthermore, in a magnification changeable optical system L, the distortion rate as one of optical properties changes along with a change in magnification or focal length. It is tremendously difficult to design such an optical system L as to prevent the change of the distortion rate without enlarging the optical system L.

The present invention has been made to develop an optical system and an image processing system together, aiming for improved image quality and focusing on an optical property which is tremendously difficult to improve by an optical system but relatively easy by an image processing system. An object of the present invention is to provide an image processing system which can relieve the load on designing of an optical system by correcting, with the image processing system, a change in an optical property of the optical system due to a magnification change, and thereby improve total image quality. Another object of the present invention is to provide a camera incorporating such an image processing system.

According to one aspect of the present invention, an image processing system is configured to include an imaging system which has an image sensor to capture an image of a subject and outputs as pixel data an image signal of the subject output from the image sensor; a conversion buffer memory which temporarily stores the pixel data according to each pixel position; an image conversion table which stores correction information for each pixel; and an image data conversion unit which performs correction processing on each pixel data stored in the conversion buffer memory based on the correction information stored in the image conversion table, and sequentially outputs the corrected pixel data, wherein the correction information in the image conversion table is changed in accordance with a change in a magnification of the imaging system.

In features of this aspect, the image processing system further comprises a display buffer memory which temporarily stores the pixel data corrected by the image data conversion unit in order to display the image of the subject based on the corrected pixel data.

In other features of this aspect, a memory capacity of the conversion buffer memory is set to be smaller than that of a buffer memory which stores pixel data for one image size.

In other features of this aspect, the correction information includes distortion information.

In other features of this aspect, the correction information includes at least one of distortion information, brightness information, resolution information, color aberration information, and color aberration of magnification information.

In other features of this aspect, the image processing system further comprises a preprocessing unit which performs preprocessing including at least one of a defective pixel correction, a black-level correction, and a white balance correction, on the pixel data output from the imaging system before the pixel data is stored in the conversion buffer memory.

In other features of this aspect, the image sensor is either a CCD sensor or a CMOS sensor.

According to another aspect of the present invention, a camera comprises the above-described imaging system.
The present invention will be described below with reference to the following description of an exemplary embodiment and the accompanying drawings in which:

FIG. 1 is a view for explaining a distortion of an image by an imaging system;
FIG. 2 shows an image with a barrel distortion;
FIG. 3 shows a relation between an optical system and an imaging plane;
FIG. 4 shows an example of a general distortion rate curve;
FIG. 5 shows an example of a camera incorporating an image processing system according to the present invention;
FIG. 6 shows an example of an image with a barrel distortion temporarily stored in a conversion buffer memory;
FIGs. 7A to 7C show an example of correction processing, FIG. 7A shows pixel data in the corner of an image to be corrected, FIG. 7B shows pixel data in the periphery of an image to be corrected, and FIG. 7C shows pixel data in the center of an image to be corrected;
FIG. 8 shows an example of pixel data written to a display buffer memory; and
FIG. 9A is a timing chart showing a time taken from generation of image data to an image display after correction process for a prior art image processing system, and FIG. 9B is a timing chart showing the same for the image processing system according to the present invention.

Hereinafter, an embodiment of the present invention will be described in detail with reference to the accompanying drawings.

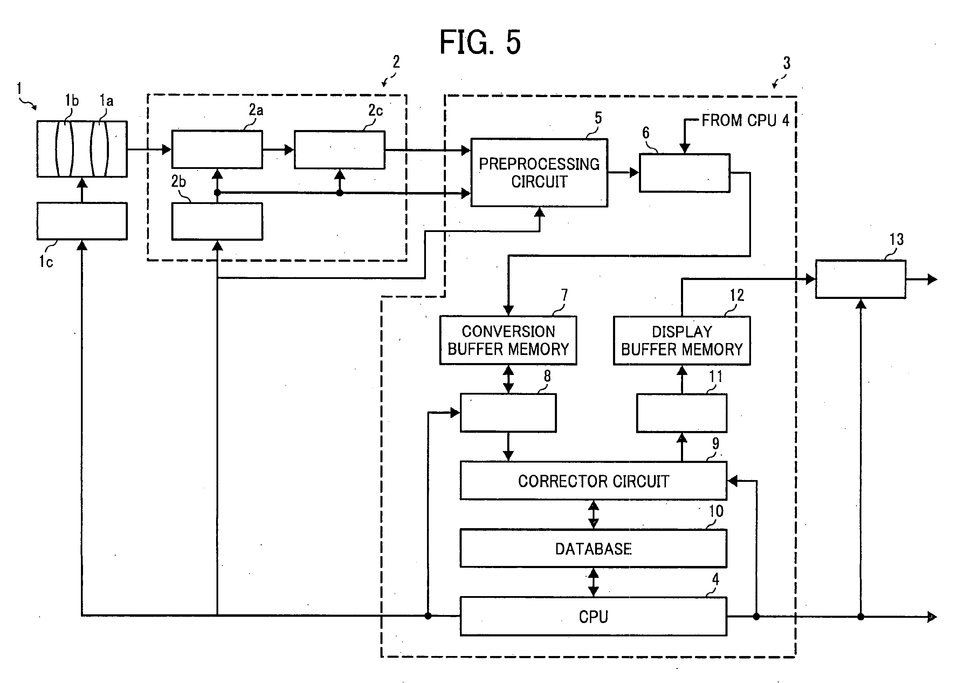

FIG. 5 shows a camera incorporating an optical system 1 and an image processing system according to the present invention which comprises an imaging unit 2, a signal processing circuit 3 and other components. The optical system 1 is comprised of an autofocus lens 1a, a zoom lens 1b, and a motor driver 1c driving the lenses.

The imaging unit 2 is comprised of a CCD 2a (image sensor), a timing generator 2b, and an A/D converter 2c. The CCD 2a as an image sensor can be replaced by a CMOS sensor. The imaging plane of the CCD 2a includes 640 pixels in a horizontal direction and 480 pixels in a vertical direction. The imaging system is comprised of the optical system 1 and the imaging unit 2 to image a subject and output an image signal of the subject output from the image sensor as image data.

The autofocus lens 1a and zoom lens 1b are controlled by a CPU 4 via the motor driver 1c while the CCD 2a and A/D converter 2c are controlled by the CPU 4 via the timing generator 2b.

The autofocus lens 1a automatically focuses a subject image P' on the imaging plane of the CCD 2a, and the zoom lens 1b enlarges/reduces the subject image P' formed on the CCD 2a. Image signals of the subject output from the CCD 2a are sequentially output as pixel data to a preprocessing circuit 5 via the A/D converter 2c. The preprocessing circuit 5 performs preprocessing including defective pixel correction, black level correction, and white balance correction on pixel data.

The preprocessed pixel data are inputted to an address counter 6 in sequence. The address counter 6 generates an address upon every receipt of a horizontal synchronous signal from the CPU 4, and writes the preprocessed pixel data to each coordinate of a conversion buffer memory 7 which temporarily stores the preprocessed pixel data in order at each coordinate. The coordinate signifies a pixel position in horizontal and vertical directions of the imaging plane. A position in the horizontal direction is expressed by a code "i" and that in the vertical direction is expressed by a code "j". (i, j) signifies a pixel position at the i-th in the horizontal direction and the j-th in the vertical direction. "i" is an integer from 1 to 640 and "j" is an integer from 1 to 480.

Each piece of pixel data stored in the conversion buffer memory 7 is input to a corrector circuit 9 via a read circuit 8. The corrector circuit 9 performs correction processing on each piece of pixel data from the read circuit 8, using a database 10.

The database 10 stores therein correction information to be used for correcting pixel data temporarily stored in each coordinate of the conversion buffer memory 7. The correction information can be about optical properties such as image distortion information, brightness information (shading), resolution information (MTF; Modulation Transfer Function), aberration information or the like. In the present embodiment, a description will be made on correction processing on pixel data having a distortion due to the autofocus lens 1a and the zoom lens 1b, as an example. The amount of distortion of an image can be obtained in advance from the optical performance of the optical system, therefore, it is easy to determine original pixel positions of each image and store distortion correction data in the database 10.

The database 10 functions as an image conversion table to contain correction information for each pixel data temporarily stored in the conversion buffer memory 7. The corrector circuit 9 functions as an image data conversion unit to perform correction processing on each pixel data at each coordinate of the conversion buffer memory 7 based on correction information in the image conversion table, and to output corrected pixel data in sequence.

Hereinafter, the correction processing will be described using a subject image P' which is distorted in a barrel shape due to the zoom lens 1b and autofocus lens 1a as shown in FIG. 2, as a way of example. The original shape of a subject P is rectangular. The correction processing is to correct the distorted image P' to a distortion-free subject image Q (indicated by a broken line in FIG. 2).

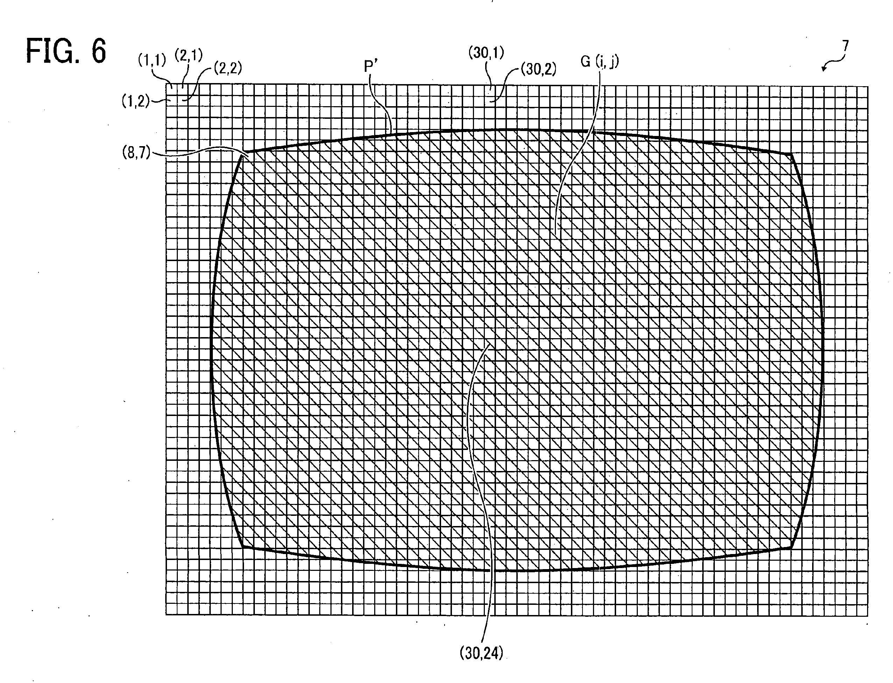

FIG. 6 shows an enlarged subject image P' with a barrel distortion. In the drawing the code G (i, j) indicates pixel data at a coordinate (i, j). For the sake of simplicity, the number of pixels in the conversion buffer memory 7 is 64 in the horizontal direction and 48 in the vertical direction in FIG. 6; however, the actual number thereof is tenfold. The code "i" is an integer from 1 to 64 and the code "j" is an integer from 1 to 48.

In the subject image P' with a barrel distortion, an amount of distortion is large in the periphery portion while it is very small in the central portion.

For example, with a distortion, pieces of pixel data G which should be written to coordinates (1, 1), (2, 1), (1, 2), (2, 2) without a distortion are written to the same coordinate (8, 7) of the conversion buffer memory 7. Another piece of pixel data G which should be written to a coordinate (30, 5) without a distortion is written to coordinates (30, 1), (30, 2) of the conversion buffer memory 7. However, there is a little distortion around the center of the optical axis so that irrespective of the distortion, pixel data G which should be written to a coordinate (30, 24) (center point) without a distortion is written to the coordinate (30, 24).

For correcting the distortion of the subject image P' captured by the optical system, the pixel data G at the coordinate (8, 7) needs to be converted to that at the coordinates (1, 1), (2, 1), (1, 2), (2, 2). Similarly, the pixel data G (30, 5) needs to be converted into that at the coordinates (30, 1), (30, 2) and the pixel data G (30, 24) into that at the coordinates (30, 24). Thus, the distortion of the subject image P' can be corrected by conversion of the coordinates.

The database 10 contains coordinate conversion information for the pixel data G (8, 7) to be converted to coordinates (1, 1), (2, 1), (1, 2), (2, 2), the pixel data G (30, 5) to be converted to coordinates (30, 1), (30, 2), and the pixel data G (30, 24) to be converted to a coordinate (30, 24) after distortion correction.

That is, the coordinate conversion information in the database 10 associates pixel data G (i, j) before distortion correction with pixel data G (m, n) after distortion correction.

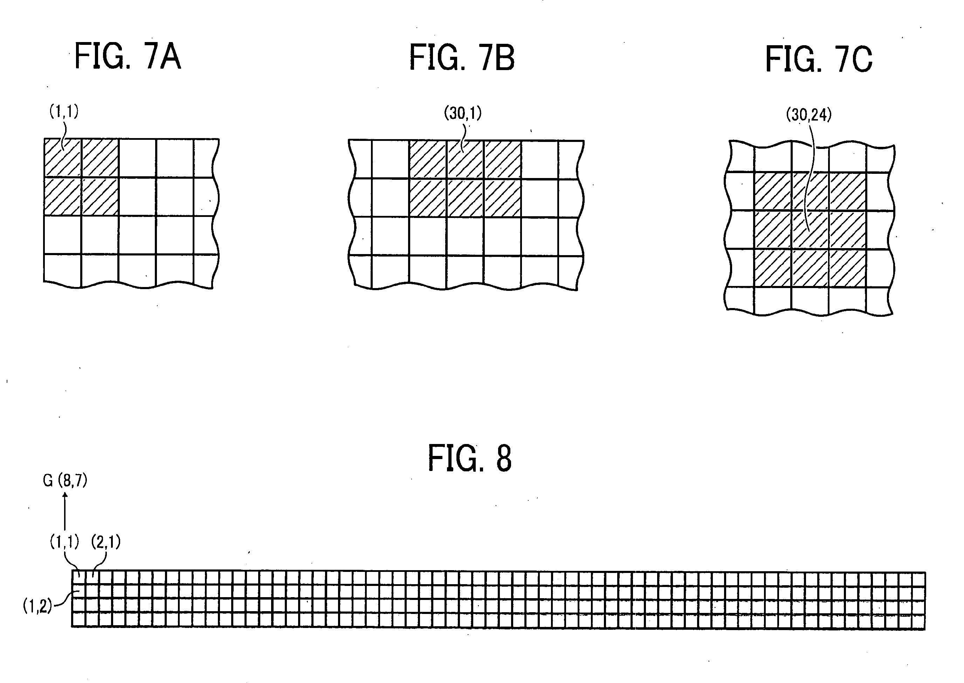

Generally, it is preferable that the database 10 is configured to contain arithmetic information together with the coordinate conversion information so that brightness correction or the like is performed concurrently with the distortion correction when necessary, using pixel data in the vicinity of pixel data G (i, j) stored in the conversion buffer memory 7 as shown in FIGs. 7A to 7C. However, in the present embodiment, only the distortion correction by the coordinate conversion processing is described for the sake of simplicity.

In the prior art, the distortion correction processing has to wait until pixel data amount for one image size is stored in the conversion buffer memory 7, which causes a delay in the correction processing and a real-time image display. Also, memories in a memory capacity to store pixel data for one image size need be prepared, leading to increases in a manufacture cost and a memory size.

On the contrary, the conversion buffer memory 7 according to the present embodiment is configured to have a memory capacity for less than pixel data for one image size.

However, still, the distortion correction processing has to wait until pixel data to be corrected is stored in the conversion buffer memory 7. For example, for correcting distortion of pixel data G (8, 7), the correction processing has to wait until the pixel data is stored at the coordinate (8, 7) of the conversion buffer memory 7 as shown in FIG. 6

From another point of view, the number of pixels of the imaging plane of the CCD 2a, or the amount of captured pixel data is larger than the memory capacity of the conversion buffer memory 7. Each piece of pixel data is written to the conversion buffer memory 7 from the first coordinate thereof in sequence. After the pixel data is written to the last coordinate, the following pixel data is written to the first coordinate again, and the data write continues in sequence.

Thus, the pixel data in the conversion buffer memory 7 is periodically overwritten. Therefore, the conversion buffer memory 7 should be designed to have extraneous memory capacity in order to prevent pixel data to be corrected from being deleted before the distortion correction.

Further, distortion correction information used for coordinate conversion is changed according to a magnification of the zoom lens 1b and a focus state of the autofocus lens 1a. In the present embodiment, the zoom lens 1b is set to 3 levels, wide, mean, telephoto and a distortion rate changes according to a change in the magnification of the zoom lens 1b. For example, the distortion rate is assumed to be 10% at telephoto, 20% at mean, 30% at wide. The CPU 4 changes the correction information stored in the database 10 according to the magnification of the zoom lens 1b.

The memory capacity of the conversion buffer memory 7 is 144 lines at wide, 96 lines at mean, and 48 lines at telephoto when data for one image size in X-axis direction is constituted of 480 lines.

In the present embodiment, a subject image P' captured at wide angle with a distortion rate 30% is processed and the database 10 stores correction information for wide angles.

The memory capacity of the conversion buffer memory 7 is (640 × 480) × 30 × (12/8) bytes where the number of pixels of the imaging plane of the CCD 2a is H640 × V480, a distortion rate is 30%, the number of bits of pixel data is 12, and 1 byte is 8 bits.

The CPU 4 changes a correction start timing according to a distortion rate. With a reduced distortion rate, the conversion buffer memory 7 needs a less memory capacity.

The conversion buffer memory 7 stores correction information at each pixel for the distortion rate 30% and the memory capacity thereof is 144 lines plus α lines. The α lines corresponds to the extra memory capacity to prevent the pixel data from being deleted before the distortion correction.

Pixel data is written to each line of the conversion buffer memory 7 from left to right, from the first coordinate (1, 1) sequentially. After pixel data is written to the last coordinate (144+α, 640), following pixel data is written to the first coordinate (1, 1) again.

The corrector circuit 9 starts correction processing under control of the CPU 4 immediately after the pixel data is written to the coordinate (144, 640) of the conversion buffer memory 7. The CPU 4 starts writing pixel data to the first coordinate upon completion of data write to all the lines (144+α) of the conversion buffer memory 7.

According to an instruction from the CPU 4 and distortion correction information in the database 10, the corrector circuit 9 reads pixel data G (i, j) at a coordinate in question from the conversion buffer memory 7 via the read circuit 8 and performs distortion correction.

Then, the pixel data distortion-corrected by the corrector circuit 9 is written to the coordinates of the display buffer memory 12 in sequence via a write circuit 11. The distortion correction is done based on the distortion correction information of the database 10 from left to right, from the first coordinate of the first line of the display buffer memory 12 to the last coordinate of the last (144 + α) line. For example, as shown in FIG. 8, pixel data G (8, 7) in the conversion buffer memory 7 (FIG. 6) is written to coordinates (1, 1), (2, 1) of the display buffer memory 12, pixel data G (30, 5) to the coordinate (30,1), and pixel data G (8, 7) to coordinates (2,1), (2,2). Upon completion of data write to the last line, data write returns to the first coordinate of the first line.

By repeating such distortion correction, distortion-corrected pixel data G (m, n) is stored in the display buffer memory 12 and video signals are outputted via a read circuit 13 to a not-shown monitor screen for display, for example.

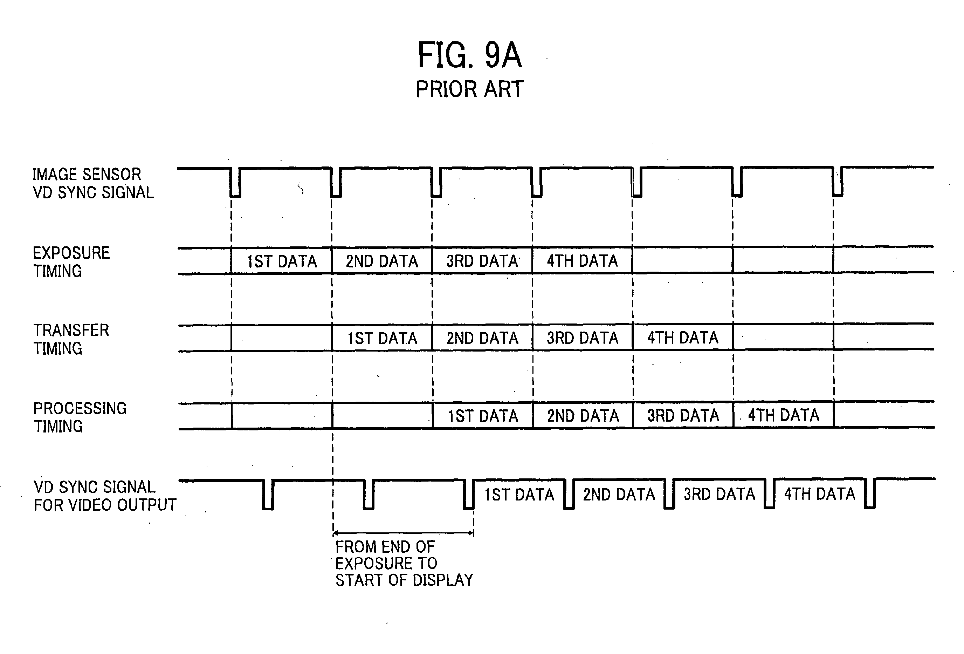

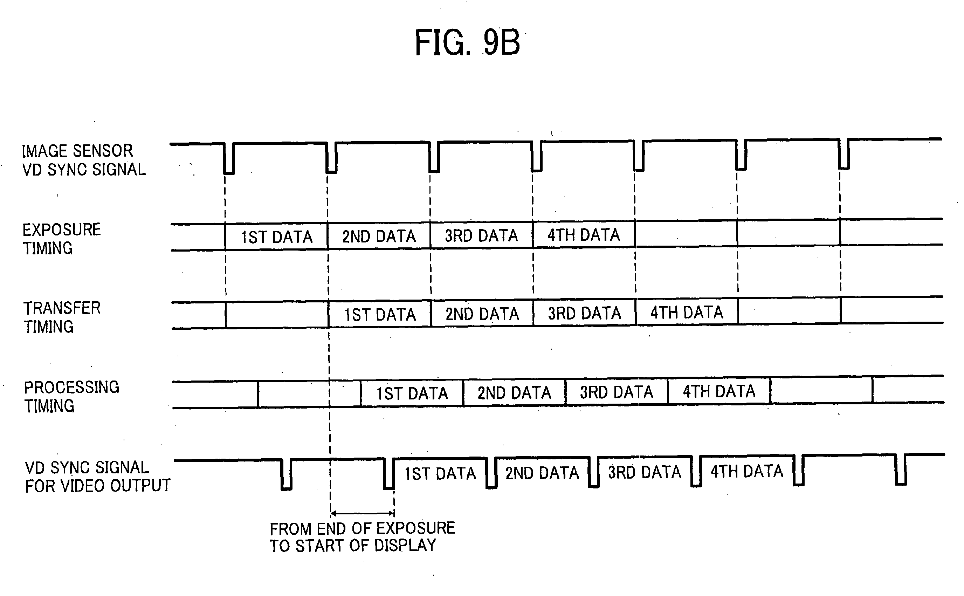

As shown in FIG. 9A, in the prior art camera, exposure processing is performed in synchronization with a vertical synchronous signal VD from an image sensor (CCD 2a). Then, after transfer of image data for one image size, distortion correction is performed on pixel data for one image size in a conversion buffer memory. The image sensor and monitor screen operate in asynchronous with each other so that monitor display can start upon completion of the correction processing. However, the image display on the monitor screen delays by one and half frames from completion of the exposure processing at shortest. The one and half frames correspond to a transfer time and an image process time.

In the image processing system of FIG. 9A, image processing and image data transfer are done asynchronously with each other. In order to prevent display image data from being overwritten, the system needs to comprise a display buffer memory with a memory capacity of data amount for one image size, which may cause an increase in system cost.

On the contrary, according to the present embodiment, the image display delays only by a half frame or less from the completion of the exposure processing since it starts without waiting for transfer of pixel data for one image size. This eliminates the necessity for the display buffer memory to have a memory capacity for data amount for one image size.

As described above, reducing the memory capacity of the conversion buffer memory 7 to less than pixel data amount for one image size makes it possible to realize speedup of image processing, cost reduction and power saving of a camera. Further, the image processing system according to the present embodiment can improve image quality without an enlarged optical system, which contributes to downsizing of a camera. It is therefore applicable to cameras for various uses such as for vehicles, monitoring, and medical care.

Moreover, according to the present embodiment, it is able to abate a load on designing of an optical system by correcting, with the image processing system, an optical property of the optical system due to a magnification change, thereby improving total image quality.

The above embodiment has described the correction of a subject image with a barrel distortion; however, the present invention is not limited thereto. It is also applicable to the correction of a subject image with a quill-like distortion.

The image processing system according to the present embodiment comprises the display buffer memory 12. However, the display buffer memory 12 is omissible.

Further, the image processing system according to the present embodiment is configured to include the conversion buffer memory 7 and display buffer memory 12 in the signal processing circuit 3. However, these buffer memories can be provided outside the signal processing circuit 3.

Further, according to the present embodiment, even with a change in the optical property of an optical system due to a change of magnification thereof, image correction information is changeable in accordance with the change in the optical property. Therefore, deterioration in an image caused by the change can be corrected by an image processing system. This results in preventing enlargement of the optical system and reducing a development cost of a camera.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An image processing system comprising:
an imaging system which has an image sensor (2a) to capture an image of a subject and outputs as pixel data an image signal of the subject output from the image sensor (2a);
a conversion buffer memory (7) which temporarily stores the pixel data according to each pixel position;
an image conversion table (10) which stores correction information for each pixel; and
an image data conversion unit (9) which performs correction processing on each pixel data stored in the conversion buffer memory (7) based on the correction information stored in the image conversion table (10), and sequentially outputs the corrected pixel data, wherein
the correction information in the image conversion table (10) is changed in accordance with a change in a magnification of the imaging system.

2. An image processing system according to claim 1, further comprising a display buffer memory (12) which temporarily stores the pixel data corrected by the image data conversion unit (9) in order to display the image of the subject based on the corrected pixel data.

3. An image processing system according to claim 1 or 2, wherein a memory capacity of the conversion buffer memory (7) is set to be smaller than that of a buffer memory which stores pixel data for one image size.

4. An image processing system according to claim 1, 2 or 3, wherein the correction information includes distortion information.

5. An image processing system according to claim 1, 2, 3 or 4, wherein the correction information includes at least one of distortion information, brightness information, resolution information, color aberration information, and color aberration of magnification information.

6. An image processing system according to claim 1, 2, 3, 4 or 5, further comprising a preprocessing unit (5) which performs preprocessing including at least one of a defective pixel correction, a black-level correction, and a white balance correction, on the pixel data output from the imaging system before the pixel data is stored in the conversion buffer memory.

7. An image processing system according to any one of the preceding claims, wherein the image sensor (2a) is either a CCD sensor or a CMOS sensor.

8. A camera comprising the imaging system according to any one of the preceding claims.

9. An image processing method for correcting pixel data of an image signal output by an image sensor (2a), the method comprising:
temporarily storing the pixel data according to each pixel position in a conversion buffer memory (7);
storing correction information for each pixel in an image conversion table (10); and
performing correction processing on each pixel data stored in the conversion buffer memory (7) based on the correction information stored in the image conversion table (10) and sequentially outputting the corrected pixel data; and
changing the correction information in the image conversion table in accordance in a change in magnification of an imaging system in which the image sensor is incorporated.

10. A computer program comprising program code means that, when executed by a computer system, instruct the computer system to perform a method according to claim 9.
